# EUROPEAN PATENT SPECIFICATION

(11) **EP 3 487 043 B1**
(45) Date of publication and mention of the grant of the patent: **30.12.2020**
(21) Application number: 18206977.3
(22) Date of filing: 19.11.2018
(51) Int. Cl.: H02K 3/16, H02K 3/20, H02K 15/00, H02K 21/46, H02K 1/22, H02K 17/16

(54) **ADDITIVE AMORTISSEUR CIRCUIT**
ADDITIVE DÄMPFERSCHALTUNG
CIRCUIT AMORTISSEUR ADDITIF

(30) Priority: 17.11.2017 US 201715816695
(43) Date of publication of application: 22.05.2019
(73) Proprietor: Hamilton Sundstrand Corporation, Charlotte, NC 28217-4578 (US)
(72) Inventor: WENTLAND, William L., Rockford, IL 61114 (US); KARLEN, Eric, Rockford, IL 61114 (US); PATEL, Dhaval, Loves Park, IL 61111 (US); WILKINSON, Andrew R., Cherry Valley, IL 61016 (US)
(74) Representative: Dehns

(56) References cited:
- DE-B- 1 015 122
- JP-A- H09 117 119
- US-A- 3 246 188
- US-A- 3 870 912
- US-A1- 2007 075 603

## Description

### FIELD

The present disclosure relates to electric motors or electric generators, and more specifically, to amortisseur circuits of rotors.

### BACKGROUND

Most conventional electric motors and/or electric generators have a rotor made of separate planar members of ferromagnetic material that are held together by a binder, such as an epoxy. Rotors also generally include a plurality of amortisseur bars that extend along the rotor stack between opposite axial ends of the rotor stack. Conventional rotors further include end laminations that help to hold the rotor stack together and that, together with the amortisseur bars, form an amortisseur circuit. Conventional end laminations are often brazed to the opposite ends of the rotor stack. Brazing generally involves introducing heat to the rotor stack assembly, and this heat may lead to localized hotspots that may degrade the mechanical properties of the rotor stack. Additionally braze filler material may flow into undesired areas of the rotor stack, or binders/adhesives of the rotor stack may volatize, further degrading the structural integrity of the rotor stack. Still further, end laminations are often heavy and may add excessive weight to the electric motor.

US 3 870 912 A relates to a synchronous electric machine with a smooth core rotor. JP H09 117119 A relates to a squirrel-cage rotor and its manufacture.

### SUMMARY

In various embodiments, the present disclosure provides a method of manufacturing a rotor for an electric motor or an electric generator as claimed in claim 1. The method may include positioning a plurality of amortisseur bars circumferentially around a rotor stack, wherein the plurality of amortisseur bars extend between a first axial end of the rotor stack and a second axial end of the rotor stack opposite the first axial end. The method may also include additively manufacturing electrically conductive material on the first axial end and the second axial end of the rotor stack and electrically interconnecting the plurality of amortisseur bars together via the electrically conductive material to form an amortisseur circuit.

In various embodiments, the step of positioning the plurality of amortisseur bars is performed before additively manufacturing the electrically conductive material. In various embodiments, positioning the plurality of amortisseur bars is performed after additively manufacturing the electrically conductive material. In various embodiments, positioning the plurality of amortisseur bars includes additively manufacturing the amortisseur bars.

In various embodiments, additively manufacturing the electrically conductive material includes forming a pattern of electrically conductive traces. In various embodiments, the pattern includes a plurality of radially extending traces. In various embodiments, the pattern includes a mesh-like formation of electrically conductive traces.

Also disclosed herein, according to various embodiments, is a rotor of an electric motor or an electric generator is provided as claimed in claim 6. The rotor may include a rotor stack having a central longitudinal axis, a first axial end, and a second axial end opposite the first axial end. The rotor may include a plurality of amortisseur bars circumferentially distributed around and radially outward of the central longitudinal axis of the rotor stack. The plurality of amortisseur bars may extend substantially parallel to the central longitudinal axis between the first axial end and the second axial end. The rotor may further include a first layer of electrically conductive material on the first axial end of the rotor stack and a second layer of electrically conductive material on the second axial end of the rotor stack. In various embodiments, the first layer and the second layer each includes a non-solid pattern of electrically conductive traces.

In various embodiments, any cross-section, perpendicular to the central longitudinal axis, of the first layer and the second layer defines at least one gap. The at least one gap may be radially positioned between adjacent amortisseur bars of the plurality of amortisseur bars. In various embodiments, the non-solid pattern of electrically conductive traces comprises a plurality of radially extending traces. In various embodiments, the non-solid pattern of electrically conductive traces comprises a mesh-like formation of electrically conductive traces. In various embodiments, the first axial end and the second axial end are free of electrically conductive lamination layers. Also disclosed herein, according to various embodiments, is an electric motor that includes a stator and the rotor as described above.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a perspective view of an electric machine, such as an electric motor or an electric generator, in accordance with various embodiments;
FIG. 2A is a perspective view of a channel defined in a rotor stack for an amortisseur bar, in accordance with various embodiments;
FIG. 2B is an end view of a rotor stack before amortisseur bars are provided, in accordance with various embodiments;
FIG. 3A is a perspective view of an amortisseur bar of a rotor stack and an additively manufactured conductive material disposed on an end of the rotor stack, in accordance with various embodiments;
FIG. 3B is an end view of a rotor stack showing a pattern of additively manufactured conductive material, in accordance with various embodiments;
FIG. 4A is a perspective view of an amortisseur bar of a rotor stack and an additively manufactured conductive material disposed on an end of the rotor stack, in accordance with various embodiments;
FIG. 4B is an end view of a rotor stack showing a pattern of additively manufactured conductive material, in accordance with various embodiments;
FIG. 5A is a perspective view of an amortisseur bar of a rotor stack and an additively manufactured conductive material disposed on an end of the rotor stack, in accordance with various embodiments;
FIG. 5B is an end view of a rotor stack showing a pattern of additively manufactured conductive material, in accordance with various embodiments; and
FIG. 6 is a schematic flow chart diagram of a method of manufacturing a rotor stack, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the invention as defined by the claims. Thus, the detailed description herein is presented for purposes of illustration only and not of limitation.

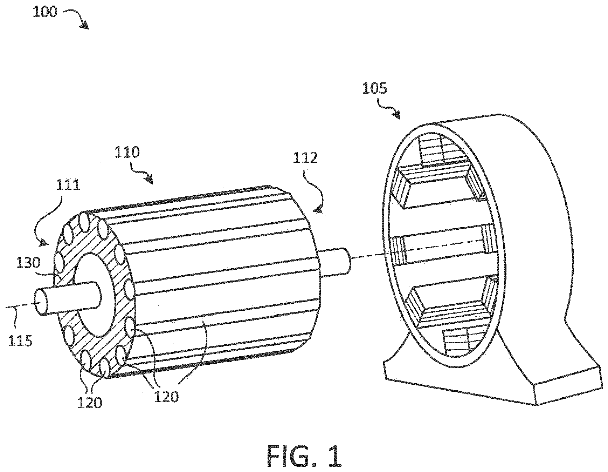

In various embodiments, and with reference to FIG. 1, an electric machine 100, such as an electric motor or an electric generator, having an additively manufactured amortisseur circuit is disclosed herein. The electric machine 100 generally includes a stator 105 and a rotor 110. The amortisseur circuit includes a plurality of amortisseur bars 120 extending along a rotor 110 and an electrically conductive material 130 formed, via additive manufacturing techniques, on opposite ends of the rotor stack. Although the electrically conductive material 130 is represented as parallel hatching in FIG. 1, the electrically conductive material 130, as described in greater detail below, generally refers to a non-solid pattern of material (e.g., not a lamination layer). Accordingly, the pattern of the electrically conductive material 130 formed on opposite ends of the rotor 110 is not limited to the hatching pattern shown in FIG. 1. Thus, the hatching pattern of FIG. 1 schematically represents the traces of electrically conductive material 130. In various embodiments, the electric machine 100 is an electric motor or an electric generator of an aircraft.

As used herein, and with continued reference to FIG. 1, the terms axial, radial, and circumferential are relative to the central longitudinal axis 115 of the rotor 110. That is, a first component that is "radially outward" of a second component means that the first component is positioned at a greater distance away from the central longitudinal axis 115 of the rotor 110 than the second component. Correspondingly, a first component that is "radially inward" of a second component means that the first component is positioned closer to axis 115 than the second component. Accordingly, in the case of the rotor 110, components that are radially inward of other components and that rotate circumferentially about the central longitudinal axis 115 rotates through a circumferentially shorter path than the other components. Similarly, the term "axial" generally refers to a position along the central longitudinal axis 115.

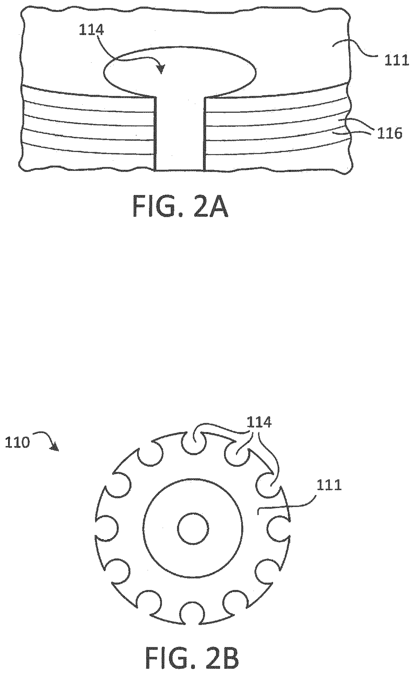

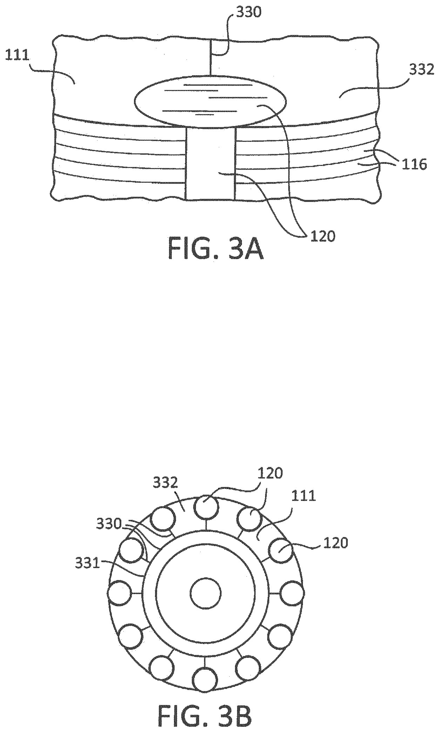

In various embodiments, and with reference to FIGS. 1, 2A, and 2B, the rotor 110, also referred to herein as "rotor stack" 110, includes a plurality of separate planar members of ferromagnetic material 116 that are held together by a binder or an adhesive. The rotor stack 110 may be made from iron or iron alloys, such as ferrosilicon, among other ferromagnetic materials. In various embodiments, and with reference to FIGS. 1, 3A, and 3B, rotor stack 110 also includes a plurality of amortisseur bars 120 that extend along the rotor stack 110 between opposite axial ends 111, 112 of the rotor stack. That is the rotor stack 110 may have a first axial end 111 and a second axial end 112 opposite the first axial end 111, and the amortisseur bars 120 may be configured to have opposite ends that are flush or substantially planar with the axial ends 111, 112 of the rotor stack 110.

In various embodiments, the amortisseur bars 120 are circumferentially distributed around central longitudinal axis 115 of the rotor 110. In various embodiments, the amortisseur bars 120 are radially outward of the central longitudinal axis 115 of the rotor 110 and may extend substantially parallel to the central longitudinal axis 115 (e.g., the amortisseur bars 120 may be skewed relative to the central longitudinal axis 115, but generally extend longitudinally between opposing ends of the rotor 110). The amortisseur bars 120 may be disposed within preformed channels 114 (with momentary reference to FIGS. 2A and 2B) of the rotor stack. The channels 114 may facilitate retention of the amortisseur bars 120 and may contributed to the mechanical strength of the electric machine 100. In various embodiments, the amortisseur bars may be only partially retained in channels, or the amortisseur bars may be entirely external to the rotor stack 110.

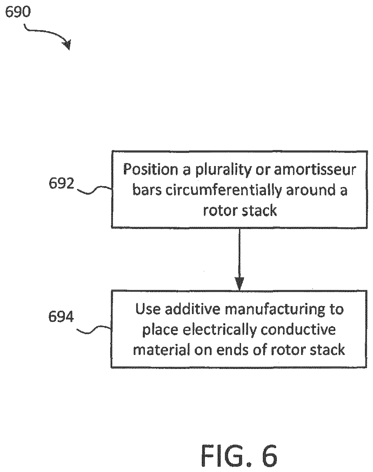

In various embodiments, and with reference to FIG. 1, the rotor 110 also includes an electrically conductive material 130 placed on the axial ends 111, 112 of the rotor stack 110 via additive manufacturing. Additional details pertaining to the method of forming the electrically conductive material 130 on the axial ends 111, 112 of the rotor stack 110 are included below with reference to FIG. 6. In various embodiments, electrically conductive material is deposited via additive manufacturing on both axial ends 111, 112 of the rotor stack. For example, a first layer of electrically conductive material may be disposed/placed/formed on the first axial end 111 of the rotor stack 110 and a second layer of electrically conductive material may be disposed/placed/formed on the second axial end 112 of the rotor stack. In various embodiments, the electrically conductive material (e.g., the first and second layers of electrically conductive material) forms a non-solid pattern of electrically conductive traces. Said differently, any cross-section, perpendicular to the central longitudinal axis 115 of the rotor stack 110, of the electrically conductive material (e.g., the first and second layers of electrically conductive material) defines at least one gap. That is, the electrically conductive material 130 is not a solid plate of material and is not a lamination layer at opposite axial ends of the rotor stack 110. Thus, the axial ends 111, 112 of the rotor 110 may be free of electrically conductive lamination layers. Utilizing additive manufacturing to apply a plurality of electrically conductive traces across the axial ends 111, 112 of the rotor 110 decreases manufacturing costs, compared with using conventional end lamination plates.

In various embodiments, and with reference to FIGS. 3A and 3B, the non-solid pattern of the electrically conductive material disposed on the axial ends 111, 112 of the rotor stack 110 is a plurality of radially extending, electrically conductive traces 330. In various embodiments, gaps 332 may be formed between adjacent electrically conductive traces 330. The gaps 332 defined in the electrically conductive layer by the electrically conductive traces 330 may at least be radially positioned between adjacent amortisseur bars 120. In various embodiments, the non-solid pattern of electrically conductive material includes a ring 331 disposed radially inward of the amortisseur bars 120, and the radially extending, electrically conductive traces 330 extend between the amortisseur bars 120 and the ring 331.

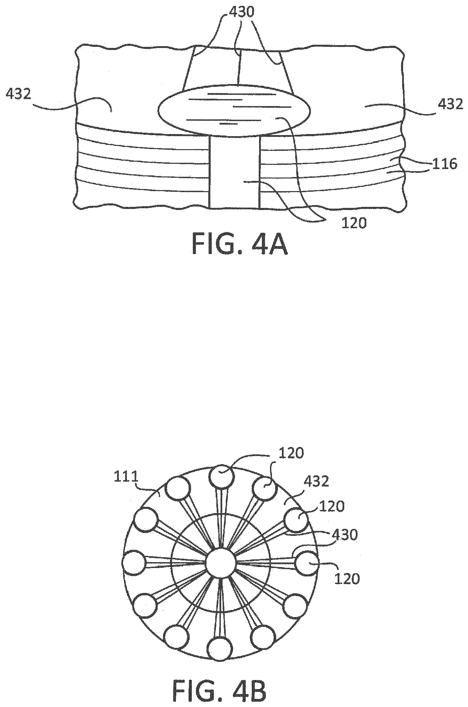

In various embodiments, and with reference to FIGS. 4A and 4B, the non-solid pattern of the electrically conductive material disposed on the axial ends 111, 112 of the rotor stack 110 is a plurality of radially extending traces 430. In various embodiments, gaps 432 may be formed between circumferentially adjacent traces 430. In various embodiments, a plurality of radially extending traces 430 may extend to each amortisseur bar 120 such that one or more gaps 432 are defined between circumferentially adjacent, radially extending traces 430 that extend to each amortisseur bar 120.

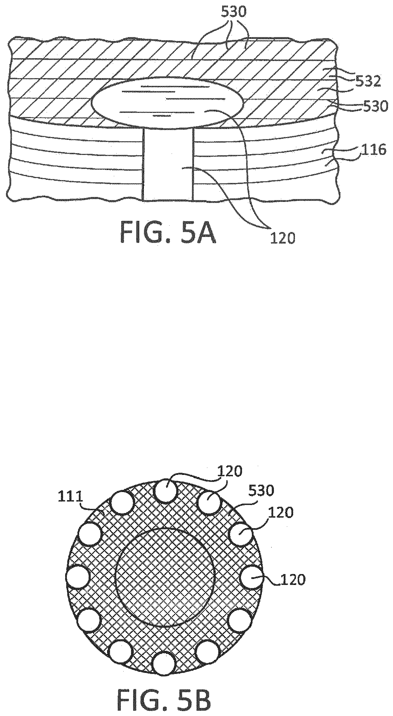

In various embodiments, and with reference to FIGS. 5A and 5B, the non-solid pattern of the electrically conductive material disposed on the axial ends 111, 112 of the rotor stack 110 is a mesh-like formation of electrically conductive traces 530. In various embodiments, gaps 532 may be formed between the traces 530. As mentioned above, the gaps 532 defined in the electrically conductive layer by the electrically conductive traces 530 may at least be radially positioned between adjacent amortisseur bars 120. In various embodiments, the electrically conductive material may include other patterns of traces, such as star-shaped or otherwise.

In various embodiments, the traces 430, 530 of electrically conductive material may not completely cover the axial ends of the amortisseur bars 120, but instead may terminate in electrical connection with the amortisseur bars 120, as shown in FIGS. 4A, 4B, 5A, and 5B. In various embodiments, the non-solid pattern of electrically conductive material extends over the axial ends of the amortisseur bars 120. In various embodiments, the electrically conductive material includes copper, copper alloy, aluminum, aluminum alloys, nickel, nickel based alloys, titanium-based materials, or electrically conductive carbon materials, among others.

In various embodiments, forming a non-solid pattern of electrically conductive material 130 on opposite axial ends 111, 112 of the rotor stack 110 via additive manufacturing provides various benefits over solid end-plate brazing techniques. The non-solid pattern of electrically conductive material 130, such as the pattern formed by traces 430 and traces 530, enables the amortisseur circuit to be completed while reducing the amount and weight of material used, according to various embodiments. Further, the rotation dynamics of the rotor 110 may be tuned, at least to a degree, using different patterns of traces, according to various embodiments. Still further, forming the non-solid pattern of electrically conductive material via additive manufacturing does not expose the rotor stack 110 to excessive temperatures and thus the rotor stack 110 does not experience localized hot spots, as would otherwise occur if conventional sold end-plate brazing techniques were employed, according to various embodiments.

In various embodiments, and with reference to FIG. 6, a method 690 of manufacturing a rotor 110 for an electric machine 100, such as an electric motor or an electric generator, is provided. The method 690 may include positioning a plurality of amortisseur bars 120 circumferentially around a rotor stack 110 at step 692 and using additive manufacturing to place electrically conductive material 130 on axial ends 111, 112 of the rotor stack 110 at step 694. In various embodiments, the steps 692, 694 of the method 690 electrically interconnect an amortisseur circuit that includes the plurality of amortisseur bars 120 and the electrically conductive material 130. In various embodiments, the phrase "using additive manufacturing" refers to incremental material deposition. In various embodiments, step 694 includes a high velocity oxy fuel ("HVOF") procedure, a micro-HVOF procedure, plasma arc deposition, or directed energy deposition additive manufacturing, among other technologies.

In various embodiments, step 692 is performed before step 694. That is, the amortisseur bars 120 may be in place within channels 114 of a rotor stack 110 or disposed external to the rotor stack 110 before using additive manufacturing to form the non-solid pattern of electrically conductive material. In various embodiments, step 692 is performed after step 694. That is, the electrically conductive material may be first formed on opposite axial ends 111, 112 of the rotor stack 110 before positioning the amortisseur bars 120 within channels 114 or otherwise placing the amortisseur bars 120. In various embodiments, step 692 is performed using additive manufacturing. That is, the amortisseur bars 120 themselves may be formed via additive manufacturing.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it may be within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A method of manufacturing a rotor for an electric motor or an electric generator, the method comprising:
positioning a plurality of amortisseur bars (120) circumferentially around a rotor stack (110), wherein the plurality of amortisseur bars extend between a first axial end (111) of the rotor stack and a second axial end (112) of the rotor stack opposite the first axial end; and
additively manufacturing electrically conductive material (116) on the first axial end and the second axial end of the rotor stack; and
electrically interconnecting the plurality of amortisseur bars together via the electrically conductive material to form an amortisseur circuit;
wherein additively manufacturing the electrically conductive material comprises forming a plurality of radially extending traces (430) that extend to each amortisseur bar such that one or more gaps are defined between circumferentially adjacent, radially extending traces that extend to each amortisseur bar.

2. The method of claim 1, wherein additively manufacturing the electrically conductive material is performed after positioning the plurality of amortisseur bars.

3. The method of claim 1, wherein positioning the plurality of amortisseur bars is performed after additively manufacturing the electrically conductive material.

4. The method of any preceding claim, wherein positioning the plurality of amortisseur bars comprises additively manufacturing the amortisseur bars.

5. The method of any preceding claim, wherein additively manufacturing the electrically conductive material comprises plasma arc deposition.

6. A rotor of an electric motor or an electric generator, the rotor comprising:
a rotor stack (110) comprising a central longitudinal axis (115), a first axial end (111), and a second axial end (112) opposite the first axial end;
a plurality of amortisseur bars (120) circumferentially distributed around and radially outward of the central longitudinal axis of the rotor stack, wherein the plurality of amortisseur bars extend between the first axial end and the second axial end; and
a first layer of electrically conductive material on the first axial end of the rotor stack;
a second layer of electrically conductive material on the second axial end of the rotor stack;
wherein the first layer of electrically conductive material and the second layer of electrically conductive material each comprises a non-solid pattern of electrically conductive traces;
**characterized in that**,
the non-solid pattern of electrically conductive traces comprises a plurality of radially extending traces (430) that extend to each amortisseur bar such that one or more gaps are defined between circumferentially adjacent, radially extending traces that extend to each amortisseur bar.

7. The rotor of claim 6, wherein any cross-section, perpendicular to the central longitudinal axis, of the first layer of electrically conductive material and the second layer of electrically conductive material defines the at least one gap.

8. The rotor of any of claims 6 or 7, wherein the first axial end and the second axial end are free of electrically conductive lamination layers.

9. An electric motor comprising:
a stator (105); and
the rotor (110) of any of claims 6 to 8.

## Patentansprüche

1. Verfahren zum Fertigen eines Rotors für einen Elektromotor oder einen elektrischen Generator, wobei das Verfahren Folgendes umfasst:
Positionieren einer Vielzahl von Dämpferstäben (120) in Umfangsrichtung um ein Rotorpaket (110), wobei sich die Vielzahl von Dämpferstäben zwischen einem ersten axialen Ende (111) des Rotorpakets und einem gegenüber dem ersten axialen Ende liegenden zweiten axialen Ende (112) des Rotorpakets erstrecken; und
additives Fertigen von elektrisch leitfähigem Material (116) an dem ersten axialen Ende und dem zweiten axialen Ende des Rotorpakets; und
elektrisches Verbinden der Vielzahl von Dämpferstäben miteinander über das elektrisch leitfähige Material, um eine Dämpferschaltung zu bilden;
wobei das additive Fertigen des elektrisch leitfähigen Materials das Bilden einer Vielzahl von sich radial erstreckenden Bahnen (430) umfasst, die sich zu jedem Dämpferstab erstrecken, sodass ein oder mehrere Abstände zwischen in Umfangsrichtung benachbarten, sich radial erstreckenden Bahnen, die sich zu jedem Dämpferstab erstrecken, definiert sind.

2. Verfahren nach Anspruch 1, wobei das additive Fertigen des elektrisch leitfähigen Materials nach dem Positionieren der Vielzahl von Dämpferstäben durchgeführt wird.

3. Verfahren nach Anspruch 1, wobei das Positionieren der Vielzahl von Dämpferstäben nach dem additiven Fertigen des elektrisch leitfähigen Materials ausgeführt wird.

4. Verfahren nach einem der vorhergehenden Ansprüche, wobei das Positionieren der Vielzahl von Dämpferstäben das additive Fertigen der Dämpferstäbe umfasst.

5. Verfahren nach einem der vorhergehenden Ansprüche, wobei das additive Fertigen des elektrisch leitfähigen Materials eine Plasmalichtbogenabscheidung umfasst.

6. Rotor eines Elektromotors oder eines elektrischen Generators, wobei der Rotor Folgendes umfasst:
ein Rotorpaket (110), das eine zentrale Längsachse (115), ein erstes axiales Ende (111) und ein dem ersten axialen Ende gegenüberliegendes zweites axiales Ende (112) aufweist;
eine Vielzahl von Dämpferstäben (120), die in Umfangsrichtung um die zentrale Längsachse des Rotorpakets und radial nach außen von dieser verteilt sind, wobei sich die Vielzahl von Dämpferstäben zwischen dem ersten axialen Ende und dem zweiten axialen Ende erstreckt; und
eine erste Schicht aus elektrisch leitfähigem Material auf dem ersten axialen Ende des Rotorpakets;
eine zweite Schicht aus elektrisch leitfähigem Material auf dem zweiten axialen Ende des Rotorpakets;
wobei die erste Schicht aus elektrisch leitfähigem Material und die zweite Schicht aus elektrisch leitfähigem Material jeweils ein nicht durchgängiges Muster aus elektrisch leitfähigen Bahnen umfasst;
**dadurch gekennzeichnet, dass** das nicht durchgängige Muster aus elektrisch leitfähigen Bahnen eine Vielzahl von sich radial erstreckenden Bahnen (430) umfasst, die sich zu jedem Dämpferstab erstrecken, sodass ein oder mehrere Abstände zwischen in Umfangsrichtung benachbarten sich radial erstreckenden Bahnen, die sich zu jedem Dämpferstab erstrecken, definiert sind.

7. Rotor nach Anspruch 6, wobei jeder senkrecht zur zentralen Längsachse verlaufende Querschnitt der ersten Schicht aus elektrisch leitfähigem Material und der zweiten Schicht aus elektrisch leitfähigem Material den mindestens einen Abstand definiert.

8. Rotor nach einem der Ansprüche 6 oder 7, wobei das erste axiale Ende und das zweite axiale Ende frei von elektrisch leitfähigen Laminierungsschichten sind.

9. Elektromotor, umfassend:
einen Stator (105); und
den Rotor (110) nach einem der Ansprüche 6 bis 8.

## Revendications

1. Procédé de fabrication d'un rotor pour un moteur électrique ou un générateur électrique, le procédé comprenant :
le positionnement d'une pluralité de barres amortisseuses (120) circonférentiellement autour d'un empilement de rotor (110), dans lequel la pluralité de barres amortisseuses s'étendent entre une première extrémité axiale (111) de l'empilement de rotor et une seconde extrémité axiale (112) de l'empilement de rotor opposée à la première extrémité axiale ; et
la fabrication additive d'un matériau électriquement conducteur (116) sur la première extrémité axiale et la seconde extrémité axiale de l'empilement de rotor ; et
l'interconnexion électrique de la pluralité de barres amortisseuses ensemble par l'intermédiaire du matériau électriquement conducteur pour former un circuit amortisseur ;
dans lequel la fabrication additive du matériau électriquement conducteur comprend la formation d'une pluralité de traces s'étendant radialement (430) qui s'étendent jusqu'à chaque barre amortisseuse de sorte qu'un ou plusieurs espaces sont définis entre des traces s'étendant radialement circonférentiellement adjacentes qui s'étendent jusqu'à chaque barre amortisseuse.

2. Procédé selon la revendication 1, dans lequel la fabrication additive du matériau électriquement conducteur est effectuée après le positionnement de la pluralité de barres amortisseuses.

3. Procédé selon la revendication 1, dans lequel le positionnement de la pluralité de barres amortisseuses est effectué après la fabrication additive du matériau électriquement conducteur.

4. Procédé selon une quelconque revendication précédente, dans lequel le positionnement de la pluralité de barres amortisseuses comprend la fabrication additive des barres amortisseuses.

5. Procédé selon une quelconque revendication précédente, dans lequel la fabrication additive du matériau électriquement conducteur comprend un dépôt par arc plasma.

6. Rotor d'un moteur électrique ou d'un générateur électrique, le rotor comprenant :
un empilement de rotor (110) comprenant un axe longitudinal central (115), une première extrémité axiale (111) et une seconde extrémité axiale (112) opposée à la première extrémité axiale ;
une pluralité de barres amortisseuses (120) réparties circonférentiellement autour et radialement vers l'extérieur de l'axe longitudinal central de l'empilement de rotor, dans lequel la pluralité de barres amortisseuses s'étendent entre la première extrémité axiale et la seconde extrémité axiale ; et
une première couche de matériau électriquement conducteur sur la première extrémité axiale de l'empilement de rotor ;
une seconde couche de matériau électriquement conducteur sur la seconde extrémité axiale de l'empilement de rotor ;
dans lequel la première couche de matériau électriquement conducteur et la seconde couche de matériau électriquement conducteur comprennent chacune un motif non solide de traces électriquement conductrices ;
**caractérisé en ce que** le motif non solide de traces électriquement conductrices comprend une pluralité de traces s'étendant radialement (430) qui s'étendent jusqu'à chaque barre amortisseuse de sorte qu'un ou plusieurs espaces sont définis entre des traces s'étendant radialement circonférentiellement adjacentes qui s'étendent jusqu'à chaque barre amortisseuse.

7. Rotor selon la revendication 6, dans lequel toute section transversale, perpendiculaire à l'axe longitudinal central, de la première couche de matériau électriquement conducteur et de la seconde couche de matériau électriquement conducteur définit l'au moins un espace.

8. Rotor selon l'une quelconque des revendications 6 ou 7, dans lequel la première extrémité axiale et la seconde extrémité axiale sont exemptes de couches stratifiées électriquement conductrices.

9. Moteur électrique comprenant :
un stator (105) ; et
le rotor (110) selon l'une quelconque des revendications 6 à 8.
